# EUROPÄISCHE PATENTSCHRIFT

(11) **EP 2 108 601 B1**
(45) Veröffentlichungstag und Bekanntmachung des Hinweises auf die Patenterteilung: **17.11.2010**
(21) Anmeldenummer: 09167105.7
(22) Anmeldetag: 23.06.2008
(51) Int. Cl.: B65G 1/137

(54) **Rechnergestütztes Lagersystem**
Computer-assisted storage system
Magasin assisté par ordinateur

(30) Priorität: 04.07.2007 DE 202007009400 U
(43) Veröffentlichungstag der Anmeldung: 14.10.2009
(62) Teilanmeldung aus: 08158792.5
(73) Patentinhaber: Gebr. Willach GmbH, 53809 Ruppichteroth (DE)
(72) Erfinder: Müller, Hans-Friedrich, 53809, Ruppichteroth (DE); Willach, Ulrich, 53819, Neunkirchen-Seelscheid (DE)
(74) Vertreter: von Kreisler Selting Werner

(56) Entgegenhaltungen:
- US-A1- 2004 088 229

## Beschreibung

Die Erfindung betrifft ein rechnergestütztes Lagersystem mit einem Lager zum Lagern von Waren auf Fachböden, insbesondere ein Lagersystem für Apothekenlager.

Die in Apotheken vertriebenen Waren sind größtenteils in quaderförmigen Packungen enthalten, so dass sie geordnet auf den Fachböden eines Lagers untergebracht werden können. Das in Apotheken übliche Lagersystem weist Fachböden in Form von Schubladenauszügen auf. Die Waren werden in alphabetischer Reihenfolge und Ordnung in den Schubladen untergebracht, so dass das Personal den Lagerort einer Verpackung anhand des Produktnamens wenigstens ungefähr bestimmen kann. Bis zum Auffinden der gesuchten Packung ist dann noch eine Suche in begrenzter Umgebung erforderlich. Dieses weit verbreitete Lagersystem hat den Nachteil, dass bei alphabetischer Reihenfolge Packungen unterschiedlichster Größen nebeneinander zu lagern sind, so dass der Lagerraum entsprechend der größten Packungsgröße bemessen sein muss und schlecht ausgenutzt wird. Außerdem kann die gesamte Lagerung verschoben werden, wenn neue Produkte hinzukommen oder alte wegfallen, oder wenn bestimmte Produkte in größerer Zahl gelagert werden müssen, so dass die nachfolgenden Produkte verschoben werden. Ein weiterer Nachteil der alphabetischen Reihenfolge besteht darin, dass Produkte, die häufig verlangt werden, an schwer zugänglichen Stellen gelagert sein können, was zusätzliche Mühen für das Personal erfordert. Notwendige Verschiebungen des Lagerinhalts haben zur Folge, dass diejenige Schublade, in der bestimmte Produkte zu finden sind, sich häufig ändert, so dass unnötig Schubladen herausgezogen werden, um bestimmte Produkte zu finden.

Bekannt sind ferner - beispielsweise aus EP 1 407 984 B1 (Willach) - automatische Apothekenlager, bei denen die Waren in Regalen auf Fachböden gelagert sind. Die Einlagerung von Waren erfolgt durch einen Manipulator, der von einem Lagerverwaltungsrechner gesteuert wird. Bei einem derartigen Lagersystem können größere Packungen in größeren und kleinere Packungen in kleineren Fächern abgelegt werden. Die Ablage ist nicht auf eine vorgegebene Reihenfolge angewiesen. Vielmehr speichert der Lagerverwaltungsrechner den Lagerplatz jeder einzelnen Ware, damit sie von dem Manipulator bei Anforderung abgeholt werden kann. Solche vollautomatischen Lagersysteme erfordern wegen des Manipulators einen hohen Aufwand.

Ein rechnergestütztes Lagersystem, von dem der Oberbegriff des Patentanspruchs 1 ausgeht, ist beschrieben in US 2004/0088229 A1. Dort sind in einem Regal zahlreiche Fächer vorgesehen, wobei jedem Fach ein Leuchtenmodul zugeordnet ist, das von einem Lagerverwaltungsrechner gesteuert ist. Auf diese Weise wird der Bediener zu dem jeweils zu bedienenden Fach geführt.

Der Erfindung liegt die Aufgabe zugrunde, ein rechnergestütztes Lagersystem anzubieten, das generell manuell bedienbar ist, und bei dem das Personal so geführt wird, dass es die jeweils angeforderte Ware zielgerecht findet.

Das rechnergestützte Lagersystem nach der vorliegenden Erfindung ist durch den Anspruch 1 bezeichnet. Es weist eine am Lager vorgesehene Hinweisvorrichtung zum Hinweisen auf einen von dem Lagerverwaltungsrechner bestimmten Fachboden auf sowie eine Anzeigevorrichtung zum Anzeigen von Informationen über eine angeforderte Ware und/oder deren Lagerplatz.

Eine einfache und kostengünstige Hinweisvorrichtung ist eine Koordinaten-Anzeigevorrichtung zur Anzeige von Zeile und Spalte des gesuchten Fachbodens. Eine solche Hinweisvorrichtung benötigt nur stationäre Leuchtelemente und in einer Anzahl, die den Spalten und Zeilen entspricht.

Die Erfindung bietet den Vorteil, dass das Lagersystem eine Person, die eine bestimmte Ware entnehmen will, automatisch zu dem richtigen Lagerplatz führt, so dass eine alphabetische Ablage nun nicht mehr erforderlich ist. Die Waren können nach beliebigen Kriterien abgelegt werden, beispielsweise nach Packungsgröße oder Nachfragehäufigkeit. Der Lagerverwaltungsrechner, der auch das Einlagern der Waren steuert, weiß, in welchem Fach jede bestimmte Ware gelagert ist. Er führt eine Person gezielt zu diesem Lagerplatz. Die Hinweisvorrichtung bewirkt eine physische Kennzeichnung eines Fachbodens. Unter einem Fachboden wird generell ein Lagerplatz oder eine Gruppe von Lagerplätzen verstanden, wie beispielsweise eine Schublade. Die Hinweisvorrichtung kann einzelne Leuchten aufweisen, die durch Aufleuchten eine Schublade bezeichnen, oder auch beispielsweise einen Pointer, der mit einem Lichtstrahl eine Schublade markiert. In dem Lager oder am Körper der das Lager bedienenden Person befindet sich eine Anzeigevorrichtung zum Anzeigen von Informationen über eine angeforderte Ware. Diese Informationen können beispielsweise die Bezeichnung eines Lagerplatzes, einschließlich der betreffenden Schublade, sein und/oder der Name des Produktes.

Gemäß einer bevorzugten Ausgestaltung der Erfindung wird jeder an einem Verkaufsplatz eingegebenen Anforderung ein Anforderungskennzeichen zugeteilt, welches von der Hinweisvorrichtung zusammen mit der Kennzeichnung des Fachbodens angezeigt wird. Dadurch besteht die Möglichkeit, dass in einem Lager, in welchem mehrere Personen gleichzeitig arbeiten, die Aufträge, die die einzelnen Personen ausführen, optisch voneinander getrennt gehalten werden. Das Anforderungskennzeichen kann bei jeder Anforderung von Waren separat vergeben werden. Es wird hierbei einem Auftrag zugeordnet, der mehrere Waren umfassen kann. Dieser Auftrag wird von einem Lageristen ausgeführt, ohne dass dieser in Konflikt mit den Aufträgen anderer Lageristen kommt. Der ausführende Lagerist braucht sich also nur an dem jeweiligen Anforderungskennzeichen zu orientieren. Andere Anforderungskennzeichen kann er unbeachtet lassen.

Es besteht auch die Möglichkeit, ein Anforderungskennzeichen einer bestimmten Person permanent zuzuordnen. Das Anforderungskennzeichen wird dann im Falle einer Anforderung entsprechend dem jeweiligen Verkaufsplatz erzeugt.

Bei einer bevorzugten Ausführungsform der Erfindung ist das Anforderungskennzeichen eine Farbe. Die Hinweisvorrichtung weist Leuchten unterschiedlicher Farben auf, die den Farben der Anforderungskennzeichen entsprechen. Auf diese Weise kann eine Person sich beispielsweise an Leuchten der Farbe rot orientieren, um zu den entsprechenden Fachböden geführt zu werden. Ein Auftrag kann auch mehrere Waren enthalten. Beim Abarbeiten eines Auftrags müssen somit verschiedene Fachböden aufgesucht werden. Nach Abwicklung des gesamten Auftrages kann eine Quittiertaste gedrückt werden, worauf das Anforderungskennzeichen erlischt. Das Anforderungskennzeichen kann nunmehr für einen neuen Auftrag benutzt werden. Die Verwendung einer Farbe als Anforderungskennzeichen hat den Vorteil, dass die betreffende Person sich ausschließlich auf die eine Farbe konzentrieren muss. Auch die Anzeigevorrichtung zeigt diese Farbe an, entweder in einem Feld eines Displays oder als Hintergrund. Die Erfindung ermöglicht somit die manuelle Bedienung eines Lagers durch mehrere Personen, die in dem Lager gleichzeitig Aufträge ausführen, wobei Verwechslungen und Vertauschungen vermieden werden.

Das Lagersystem kann auch zum rechnergesteuerten Einlagern von Packungen in das Lager verwendet werden. Zu diesem Zweck sollte für jede Ware die Packungsgröße bekannt sein. So besteht die Möglichkeit, die Ware durch Abtasten eines Barcodes zu identifizieren und daraus auch die Packungsgröße zu bestimmen. Das System sucht dann einen Lagerplatz, der geeignet ist, diese Packungsgröße aufzunehmen. Der Lagerplatz wird durch die Hinweisvorrichtung physisch markiert, so dass die betreffende Ware von einem Bediener manuell eingelagert werden kann. Die Position des Lagerplatzes wird dann gespeichert, ebenso wie die Information über das dort gelagerte Produkt und dessen Stückzahl.

Das erfindungsgemäße Lagersystem ist auch für solche Anwendungen geeignet, bei denen sich ein Lagerraum getrennt von einem Verkaufsraum befindet. In dem Verkaufsraum befinden sich die Verkaufsplätze. Dort befinden sich bei einer Apotheke auch die Pharmazeuten, die Kunden beraten und deren Bestellungen an einem Terminal eingeben. In dem Lagerraum befinden sich Lageristen, die die Bestellungen ausführen, die ihnen auf einer Anzeigevorrichtung angezeigt werden. Zum Auffinden der Lagerplätze dient die Hinweisvorrichtung. Da diese den jeweiligen Fachboden physisch anzeigt - also nicht nur eine bloße Information über den Fachboden ausgibt, sondern Leuchtsignale, um den Fachboden zu markieren, ist die Gefahr von Verwechslungen oder Fehlausführungen gering.

Es besteht aber auch die Möglichkeit, dass ein Pharmazeut, der eine Bestellung in ein Terminal eingibt, dann auch selbst die Bestellung ausführt, wobei er durch das Lagersystem geführt wird.

Im Folgenden wird unter Bezugnahme auf die Zeichnungen ein Ausführungsbeispiel der Erfindung näher erläutert.

Es zeigen:
- Figur 1: eine perspektivische Darstellung eines Ausführungsbeispiels des Lagersystems,
- Figur 2: eine Fontansicht eines Lagers,
- Figur 3: ein Beispiel einer am Körper zu tragenden Anzeigevorrichtung,
- Figur 4: eine schematische Darstellung der Anzeigevorrichtung und
- Figur 5: eine Darstellung eines modifizierten Ausführungsbeispiels.

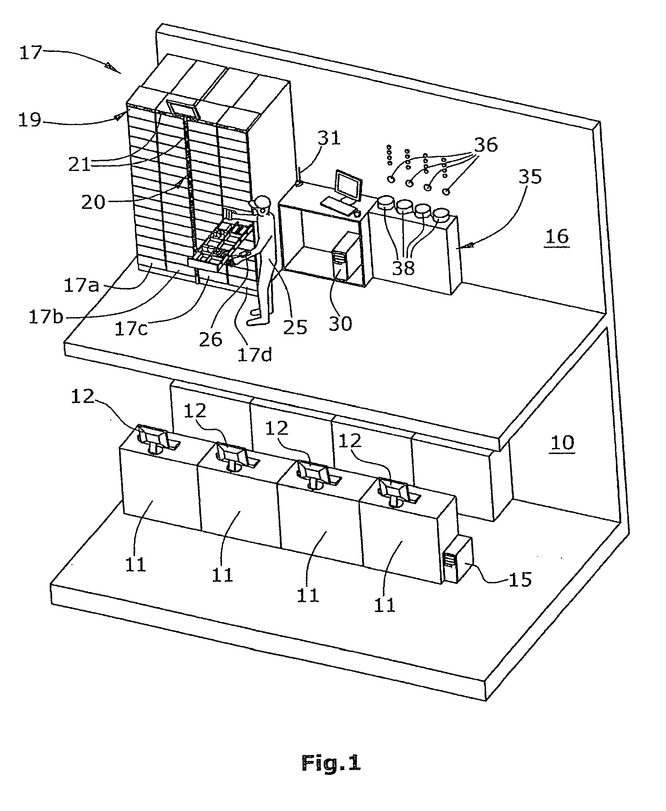

In Figur 1 ist der Verkaufsraum 10 einer Apotheke dargestellt. Darin befinden sich mehrere Verkaufsplätze 11, die jeweils mit einem Terminal 12 ausgestattet sind, welches eine Tastatur, einen Scanner und einen Bildschirm umfasst. Jedes Terminal wird von einem Pharmazeuten bedient, der hinter dem Verkaufsplatz 11 steht. Vor dem Verkaufsplatz befindet sich der Kunde. Die Terminals 12 sind mit einem Server-Rechner 15 verbunden, auf dem das Warenwirtschaftssystem installiert wurde. Diese Apothekensoftware enthält unter anderem Angaben über die zum Sortiment gehörenden Waren und gibt Auskunft über die Verträglichkeit und Kompatibilität der einzelnen Arzneimittel. Außerdem können dazu die Abmessungen einer Packung nach Länge, Breite und Höhe gehören.

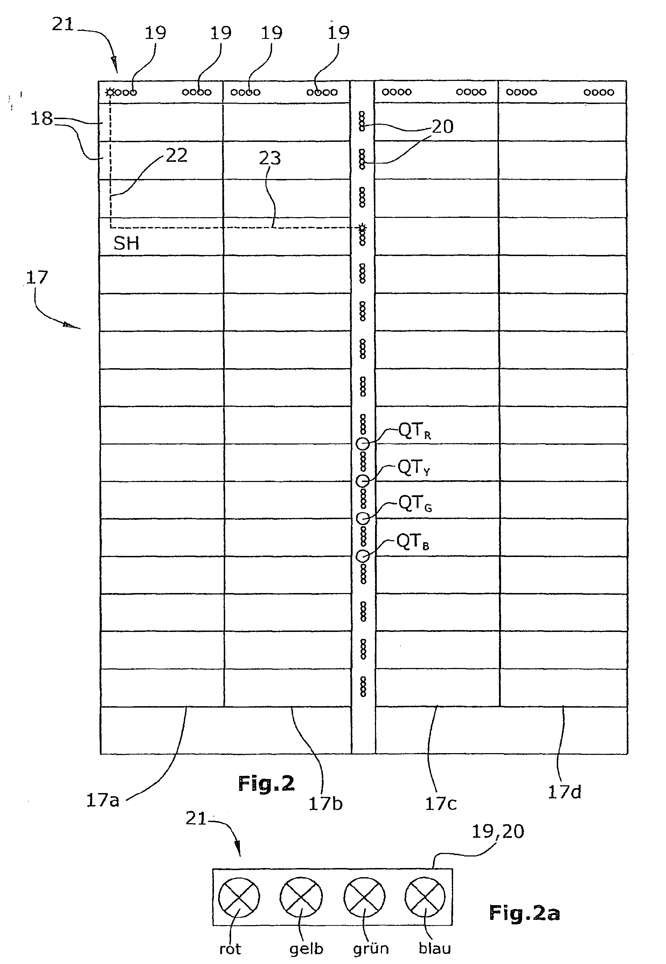

In einem Lagerraum 16, der hier von dem Verkaufsraum 10 getrennt ist, befindet sich ein Lager 17, das hier aus vier Schranksäulen 17a,17b,17c und 17d besteht. Die Schranksäulen 17a,17b enthalten Schubladen 18, von denen in Figur 2 nur die Frontblenden sichtbar sind. Jede Schranksäule enthält zwei vertikale Spalten in übereinander angeordneten horizontalen Schubladen 18. Jede Schublade ist manuell herausziehbar und weist Mittelwände 18a und Fachteiler 13 auf, mit denen der verfügbare Schubladenraum in Fächer 14 unterteilt werden kann, von denen jedes einen Lagerplatz bildet. Die Schubladen bilden hier die Fachböden. Anstelle von herausziehbaren Schubladen 18 könnten auch offene Regalfächer mit Fachböden benutzt werden, von denen jeder einen Lagerplatz bildet.

Jede Schubladenbreite ist durch eine Mittelwand 18a in zwei Hälften unterteilt. Jeder Hälfte ist eine Leuchtengruppe 19 zur Kennzeichnung der jeweiligen Spalte des Lagers zugeordnet. Eine weitere Leuchtengruppe 20 ist jeder Zeile von Schubladen zugeordnet. Durch eine Kombination einer Leuchtengruppe 19 mit einer Leuchtengruppe 20 kann eine Schubladenhälfte (rechte oder linke Hälfte) einer bestimmten Schublade angezeigt werden.

Jede Leuchtengruppe 19 und jede Leuchtengruppe 20 besteht aus Leuchten unterschiedlicher Farben, beispielsweise aus Leuchtdioden. In Figur 2a ist eine solche Leuchtengruppe dargestellt mit Leuchtdioden der Farben rot, gelb, grün und blau. Die horizontalen und vertikalen Leuchtengruppen 19,20 bilden gemeinsam eine Hinweisvorrichtung 21 in Form einer Koordinaten-Anzeigevorrichtung zur Kenntlichmachung eines Regalbodens bzw. einer Schubladenhälfte. Die jeweilige Farbe bildet ein Anforderungskennzeichen. Wenn beispielsweise einer Anforderung einer Gruppe von Waren die Farbe rot zugeteilt wurde, und wenn ein zu der Gruppe gehörender Artikel sich in der Schubladenhälfte SH befindet, leuchten die betreffenden roten Leuchtdioden der Leuchtengruppe 19 und 20, was in Figur 2 durch die gestrichelten Koordinatenlinien 22,23 angedeutet ist. Die Kombination der beiden Koordinatenlinien 22 und 23 bezeichnet die dargestellte Schubladenhälfte SH einer genau bestimmten Schublade.

Die vertikalen Leuchtengruppen 20 befinden sich entlang einer Leiste zwischen den beiden Schranksäulen 17b,17c. An dieser Leiste sind außerdem Quittiertasten QT_{R}, QT_{Y}, QT_{G} und QT_{B} angeordnet. Diese Quittiertasten sind jeweils separat für die Farben rot, gelb, grün und blau.

In dem Lagerraum 16 befindet sich der Lagerist 25. Dieser trägt am Körper eine Anzeigevorrichtung 26, beispielsweise am Unterarm wie eine Armbanduhr.

Die Einlagerung von Waren in das Lager 17 und das Auffinden von Waren zu deren Entnahme wird durch den Lagerverwaltungsrechner 30 gesteuert. Dieser ist mit dem Server-Rechner 15 verbunden und empfängt von diesem die Daten über eine Warenanforderung. Der Lagerverwaltungsrechner 30 steuert die Hinweisvorrichtung 21 an dem Lager 17. Er weist außerdem eine Antenne 31 auf und steht über Funk mit der Anzeigevorrichtung 26 in Verbindung, die ebenfalls über eine Antenne 32 verfügt.

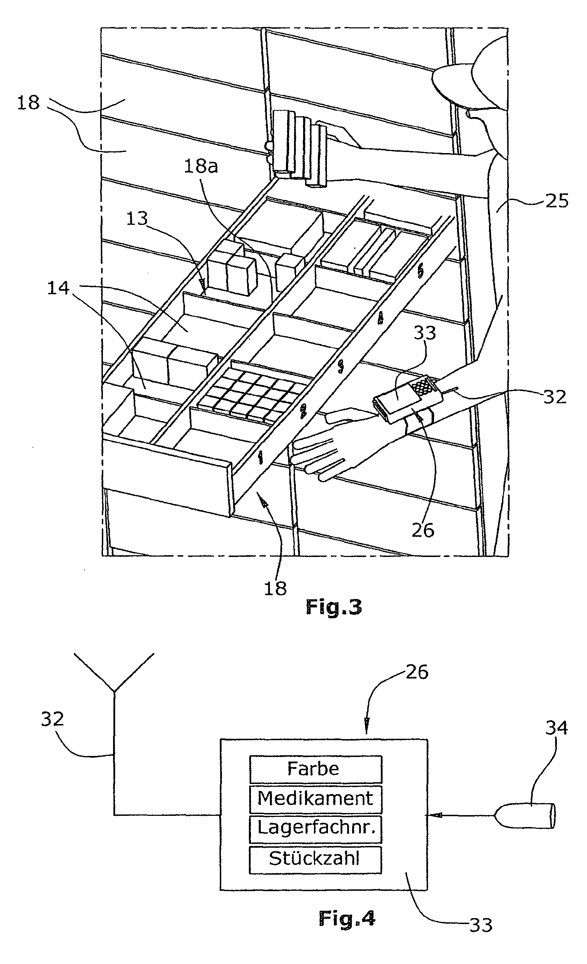

Die Anzeigevorrichtung 26 gehört zu einem mobilen Rechner, der gemäß Figur 3 am Unterarm getragen werden kann. Der Rechner weist ein Display 33 auf. Er kann ferner mit einem ebenfalls mobilen Scanner 34 zum Scannen von Barcodes verbunden sein.

Figur 4 zeigt die Anzeigevorrichtung 26. Auf dem Display 33 werden angezeigt: Das jeweilige Anforderungskennzeichen (Farbe), der Name des Medikaments oder der anderweitigen Ware, die Lagerfachnummer und die angeforderte Stückzahl. Der Lagerist kann somit sehen, was er dem Lager entnehmen soll. Er orientiert sich an der jeweiligen Farbe, die dem entsprechenden Entnahmevorgang zugeordnet ist, beispielsweise rot. Die eingeschalteten roten Leuchten weisen ihn auf den Lagerort hin. Der Lagerist zieht die entsprechende Schublade, entnimmt ihr das angeforderte Medikament. Der Entnahmevorgang wird durch die Angabe der Lagerfachnummer weiterhin erleichtert. Diese gibt an, in welcher Schublade der gewünschte Artikel lagert und in welchem Lagerplatz innerhalb der Schublade. Wenn der Lagerist den Artikel in der angeforderten Stückzahl entnommen hat, drückt er am Lager 17 die entsprechende Quittiertaste QT_{R}, die seinem Anforderungskennzeichen entspricht (hier: rot). Somit wird dem Lagerverwaltungsrechner 30 signalisiert, dass die Ware entnommen wurde. Mit der Hinweisvorrichtung 21 und auf dem Display 33 wird die nächste Anforderung des gleichen Kommissionierungsauftrages angezeigt. Sind alle Anforderungen eines Auftrages ausgeführt, wird die Ware dann einer Übergabevorrichtung 35 (Figur 1) zugeführt, bei der es sich um einen Tisch oder um die Annahmestelle eines Förderers, einer Rohrpost, einer Rutsche u. dgl. handeln kann, die die Ware in den Verkaufsraum 10 transportiert. An der Übergabevorrichtung 35 befindet sich eine weitere Quittiertaste 36 für jede Farbe. Durch die Betätigung der weiteren Quittiertaste wird bestätigt, dass der gesamte Kommissionierungsauftrag, der mehrere Waren umfassen kann, ausgeführt wurde. Daraufhin kann das Anforderungskennzeichen (Farbe rot) nunmehr einer anderen (neuen) Anforderung zugeteilt werden.

Wenn der Kunde dem Pharmazeuten beispielsweise ein Rezept übergibt, auf dem mehrere Medikamente stehen, gibt der Pharmazeut die Namen der Medikamente in das Terminal ein, sowie auch die Zahl der verlangten Waren jedes Typs. Dieser Anforderung teilt der Lagerverwaltungsrechner ein Anforderungskennzeichen mit, z.B. die Farbe rot. Der Lagerist arbeitet dann in der beschriebenen Weise den Auftrag ab und drückt bei Beendigung der Warenausgabe an den Verkaufsplatz die weitere Quittiertaste 36. Dann wird das dem Auftrag zugeteilte Anforderungskennzeichen gelöscht, so dass das Anforderungskennzeichen für einen neuen Auftrag zur Verfügung steht.

Es ist zu erkennen, dass auch ein sehr umfangreiches Warenlager mit zahlreichen Regalen bzw. Schranksäulen auf diese Weise von mehreren Lageristen verwaltet werden kann, ohne dass diese sich gegenseitig stören, weil jedem Lageristen für seine jeweilige Tätigkeit ein anderes Anforderungskennzeichen zugeteilt wurde. Dabei kann die Zahl der anfordernden Pharmazeuten die der ausführenden Lageristen deutlich übersteigen.

Beim Einlagern von Waren in das Lager 17 wird die Ware an einem Verkaufsplatz 11 oder an einer anderen Stelle im Verkaufsraum 10 oder im Lagerraum 16 mit einem Scanner abgetastet und die gewonnene Information wird im Server-Rechner 15 oder Lagerverwaltungsrechner 30 gespeichert. Der Server-Rechner 15 und der Lagerverwaltungsrechner 30 tauschen warenbezogene Daten, wie beispielsweise den Namen des Medikaments, die Packungsgröße und die Stückzahl. Der Lagerverwaltungsrechner teilt daraufhin der Ware einen bestimmten Lagerplatz zu. Bei einer späteren Anforderung der betreffenden Ware ermittelt der Lagerverwaltungsrechner den Lagerplatz und bewirkt dessen Anzeige durch die Hinweisvorrichtung 21.

Die Einlagerung kann nach verschiedenen Kriterien erfolgen. Hierzu gehört, dass ähnlich große Packungen jeweils auf dem gleichen Fachboden gelagert werden, so dass eine optimale Platzausnutzung erfolgt. Es reicht aus, wenn im Lagerverwaltungsrechner 30 bestimmte Klassen von Packungsgrößen angegeben sind, denen die entsprechende Packung dann zugeordnet wird. Ein weiteres Einlagerungskriterium ist die Nachfragehäufigkeit. Häufig verlangte Produkte werden an leicht zugänglicher Stelle des Lagers angeordnet. Ein derartiges System kann auch mit einer Lernfunktion ausgestattet werden, um die Nachfragehäufigkeit den aktuellen Verhältnissen anzupassen.

Zum Einlagern von Waren kann dieselbe Hinweisvorrichtung verwendet werden, wie zum Entnehmen. Die beiden Vorgänge können dadurch unterschieden werden, dass beim Einlagern die betreffenden Leuchten blinken.

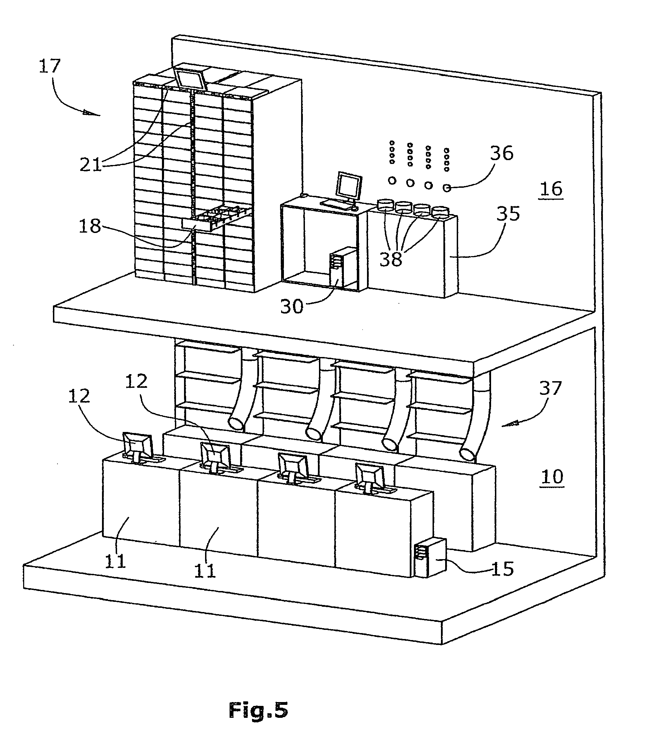

Figur 5 zeigt ein Ausführungsbeispiel, bei dem die Übergabevorrichtung 35 mit einem Rohrpostsystem 37 verbunden ist. Die Übergabevorrichtung 35 weist mehrere Eingabevorrichtungen 38 auf, von denen jede einem bestimmten Verkaufsplatz 11 zugeordnet ist. Der Lagerist übergibt die von dem Auftrag umfasste Kombination von Waren an die betreffende Eingabevorrichtung 38 und das Rohrpostsystem 37 transportiert die komplette Warenlieferung an den betreffenden Verkaufsplatz. Anstelle eines Rohrpostsystems kann eine beliebige anderweitige Fördervorrichtung benutzt werden.

Bei den beschriebenen Ausführungsbeispielen befindet sich der Lagerraum 16 in einer Etage über dem Verkaufsraum 10. Selbstverständlich können beide Räume auch auf gleicher Höhe angeordnet sein und sie müssen auch nicht voneinander getrennt sein. Auch kann der Lagerraum 16 im Keller sein.

Das erfindungsgemäße rechnergestützte Lagersystem erleichtert das zielgerichtete Aufsuchen gewünschter Lagerplätze und unterstützt den Benutzer bei der Zusammenstellung bzw. Kommissionierung von Waren. Dadurch werden Irrtümer, Verwechslungen und Fehlentnahmen verhindert. Das System erfordert einen relativ geringen Hardware-Aufwand und ist für Lager unterschiedlicher Größe anwendbar.

## Patentansprüche

1. Rechnergestütztes Lagersystem mit einem Lager (17) zum Lagern von Waren auf Fachböden, mindestens einem Verkaufsplatz (11) mit einem Terminal (12), das zur Anforderung von Waren aus dem Lager mit einem Lagerverwaltungsrechner (30) kommuniziert, einer am Lager (17) vorgesehenen Hinweisvorrichtung (21) zum Hinweisen auf einen von dem Lagerverwaltungsrechner (30) bestimmten Lagerplatz und mit einer Anzeigevorrichtung (26) zum Anzeigen von Informationen über eine angeforderte Ware und/oder deren Lagerplatz.
**dadurch gekennzeichnet,**
**dass** die Hinweisvorrichtung (21) eine Koordinaten-Anzeigevorrichtung zum Anzeigen von Zeile und Spalte ist, wobei die Zeilen durch eine erste Leuchtengruppe (19) **gekennzeichnet** sind und die Spalten durch eine zweite Leuchtengruppe (20).

2. Lagersystem nach Anspruch 1, **dadurch gekennzeichnet, dass** jeder an einem Verkaufsplatz (11) aufgegebenen Anforderung ein Anforderungskennzeichen zugeteilt wird, welches von der Hinweisvorrichtung (21) zusammen mit der Kennzeichnung des Lagerplatzes angezeigt wird.

3. Lagersystem nach Anspruch 1 oder 2, **dadurch gekennzeichnet, dass** jedem Verkaufsplatz (11) ein Anforderungskennzeichen zugeteilt ist, welches im Falle einer Anforderung von der Hinweisvorrichtung (21) zusammen mit der Kennzeichnung des Lagerplatzes angezeigt wird.

4. Lagersystem nach Anspruch 2 oder 3, **dadurch gekennzeichnet, dass** das Anforderungskennzeichen eine Farbe ist, und dass die Hinweisvorrichtung (21) Leuchtengruppen (19,20) mit Leuchten unterschiedlicher Farben aufweist, die den Farben der Anforderungskennzeichen entsprechen.

5. Lagersystem nach einem der Ansprüche 1 - 4, **dadurch gekennzeichnet, dass** die Anzeigevorrichtung (26) ein am Körper zu tragendes Handterminal ist.

6. Lagersystem nach einem der Ansprüche 1-5, **dadurch gekennzeichnet, dass** der Lagerverwaltungsrechner (30) eine Betriebsart zum Einlagern von Waren aufweist und die Zuordnung von Waren zu den Lagerplätzen in Abhängigkeit von der Packungsgröße der Waren vornimmt.

7. Lagersystem nach einem der Ansprüche 1 - 6, **dadurch gekennzeichnet, dass** der Lagerverwaltungsrechner (30) die Zuordnung von Waren zu den Lagerplätzen in Abhängigkeit von der Nachfragehäufigkeit der betreffenden Ware vornimmt.

8. Lagersystem nach Anspruch 5, **dadurch gekennzeichnet, dass** das Handterminal einen Scanner (34) zum Einlesen von Information von der Ware in das Handterminal aufweist.

9. Lagersystem nach einem der Ansprüche 1-8, **dadurch gekennzeichnet, dass** an dem Lager mindestens eine Quittiertaste (QT) vorgesehen ist, an der das ausgeführte Entnehmen einer Ware zu bestätigen ist, und deren Signal dem Lagerverwaltungsrechner (30) zugeführt wird.

10. Lagersystem nach den Ansprüchen 3 und 9, **dadurch gekennzeichnet, dass** für jedes Anforderungskennzeichen eine eigene Quittiertaste (QT_{R},QT_{Y},QT_{G},QT_{B}) vorgesehen ist.

11. Lagersystem nach Anspruch 3, **dadurch gekennzeichnet, dass** eine Quittiertaste (36) vorgesehen ist, an der die Ausführung der Abgabe der Ware an einen Verkaufsplatz eingebbar ist, und die das Löschen des Anforderungskennzeichens bewirkt.

12. Lagersystem nach Anspruch 3, **dadurch gekennzeichnet, dass** das zugeteilte Anforderungskennzeichen an der Hinweisvorrichtung (21) und an der Anzeigevorrichtung (26) angezeigt wird.

13. Lagersystem nach einem der Ansprüche 1 - 12, **dadurch gekennzeichnet, dass** das Lager (17) Schranksäulen (17a-17d) aufweist, mit Schubladen, die die Fachböden bilden.

## Claims

1. Computer-assisted storage system comprising a stock (17) for stocking goods on shelves, at least one vending place (11) with a terminal (12) communicating with a stock management computer (30) for requesting goods from the stock, an indicator device (21) provided in the stock (17) for indicating a storage position determined by the stock management computer (30), and a display device (26) for the display of information about a requested good and/or the storage position thereof,
**characterized in that**
said indicator device (21) is a coordinate indicator device for the indication of rows and columns, the rows being represented by a first set of lights (19) and the columns being represented by a second set of lights (20).

2. Storage system of claim 1, **characterized in that** a request identification is assigned to each request filed at a vending place (11), which request identification is displayed by the indicator device (21) together with identification of the storage position.

3. Storage system of claims 1 or 2, **characterized in that** a request identification is assigned to each vending place (11), which, upon a request, is displayed by the indicator device (21) together with the identification of the storage position.

4. Storage system of claim 2 or 3, **characterized in that** the request identification is a color and that the indicator device (21) comprises sets of lights (19, 20) with lights of different colors that correspond to the colors of the request identifications.

5. Storage system of one of claims 1-4, **characterized in that** the display device (26) is a hand terminal to be carried on the body.

6. Storage system of one of claims 1-5, **characterized in that** the stock management computer (30) comprises a mode for taking goods into stock and effects the assignment of goods to the storage positions depending of the package size of the goods.

7. Storage system of one of claims 1-6, **characterized in that** the stock management computer (30) effects the assignment of goods to the storage positions depending on the frequency of demand for respective goods.

8. Storage system of claim 5, **characterized in that** the hand terminal is a scanner (34) for reading information from the goods into the hand terminal.

9. Storage system of one of claims 1-8, **characterized in that** at least one acknowledgment key (QT) is provided in the stock, at which a removal of goods performed must be acknowledged, and whose signal is supplied to the stock management computer (30).

10. Storage system of claims 3 and 9, **characterized in that** a separate acknowledgment key (QT_{R}, QT_{Y}, QT_{G}, QT_{B}) is provided for each request identification.

11. Storage system of claim 3, **characterized in that** an acknowledgment key (36) is provided at which the delivery of goods to a vending place can be inputted, and which causes the cancellation of the request identification.

12. Storage system of claim 3, **characterized in that** the request identification is displayed at the indicator device (21) and on the display device (26).

13. Storage system of one of claims 1-12, **characterized in that** the stock (17) comprises cabinet columns (17a-17d) with drawer that form the shelves.

## Revendications

1. Système de magasin assisté par ordinateur comprenant un magasin (17) pour stocker des articles sur des étagères, au moins une position de vente (11) avec un terminal (12) communiquant avec un ordinateur de gestion de magasin (30) pour demander des articles dudit magasin, un dispositif indicateur (21) prévu dans le magasin (17) pour indiquer une position de stockage déterminée par ledit ordinateur de gestion de magasin (30), et un dispositif d'affichage (26) pour afficher des informations sur un article demandé et/ou son position de stockage,
**caractérisé en ce que**
le dispositif indicateur (21) est un dispositif indicateur de coordinats pour indiquer des lignes et des colonnes, les lignes étant indiquées par un premier groupe de lampes (19), les colonnes étant indiquées par un deuxième groupe de lampes (20).

2. Système de magasin selon la revendication 1, **caractérisé en ce que** l'on assigne à chaque demande faite à une position de vente (11) une identification de demande qui est indiquée par le dispositif indicateur (21) avec l'identification de la position de stockage.

3. Système de magasin selon la revendication 1 ou 2, **caractérisé en ce que** l'on assigne à chaque position de vente (11) une identification de demande qui, en cas d'une demande, est indiquée par le dispositif indicateur (21) avec l'identification de la position de stockage.

4. Système de magasin selon la revendication 2 ou 3, **caractérisé en ce que** l'identification de demande est une couleur, et que le dispositif indicateur (21) comprend des groupes de lampes (19, 20) avec des lampes de différentes couleurs correspondant aux couleurs des identifications de demande.

5. Système de magasin selon l'une quelconque des revendications 1-4, **caractérisé en ce que** ledit dispositif d'affichage (26) est un terminal à main porté sur le corps.

6. Système de magasin selon l'une quelconque des revendications 1-5, **caractérisé en ce que** l'ordinateur de gestion de magasin (30) comprend un mode pour le stockage des articles et effectue l'assignement des articles aux positions de stockage en fonction des dimensions de l'emballage des articles.

7. Système de magasin selon l'une quelconque des revendications 1-6, **caractérisé en ce que** ledit ordinateur de gestion de magasin (30) effectue l'assignement des articles aux positions de stockage en fonction de la fréquence de demande d'un article respectif.

8. Système de magasin selon la revendication 5, **caractérisé en ce que** le terminal à main est un numériseur (34) pour lire des informations des articles dans le terminal à main.

9. Système de magasin selon l'une quelconque des revendications 1-8, **caractérisé en ce que** le magasin est prévu avec au moins un bouton d'acquittement (QT) auquel il faut acquitter l'enlèvement accompli d'un article, et dont le signal est fourni à l'ordinateur de gestion de magasin (30).

10. Système de magasin selon les revendications 3 et 9, **caractérisé en ce qu'**un bouton d'acquittement distinct (QT_{R}, QT_{Y}, QT_{G}, QT_{B}) est prévu pour chaque identification de demande.

11. Système de magasin selon la revendication 3, **caractérisé en ce qu'**un bouton d'acquittement (36) est prévu, auquel on peut entrer le remise accomplie d'un article à une position de vente, et qui cause l'effacement de ladite identification de demande.

12. Système de magasin selon la revendication 3, **caractérisé en ce que** l'identification de demande assignée est affichée sur le dispositif indicateur (21) et sur le dispositif d'affichage (26).

13. Système de magasin selon l'une quelconque des revendications 1-12, **caractérisé en ce que** le magasin (17) comprend des colonnes de cabinets colonnes (17a-17d) avec des tiroirs formant les étagères.
